# FASCICULE DE BREVET EUROPEEN

(11) **EP 0 457 646 B1**
(45) Date de publication et mention de la délivrance du brevet: **13.04.1994**
(21) Numéro de dépôt: 91401175.4
(22) Date de dépôt: 03.05.1991
(51) Int. Cl.: B64C 27/605

(54) **Dispositif à plateaux cycliques montés sur articulations découplées en tangage et roulis, pour la commande du pas des pales d'un rotor de giravion**
Taumelscheibenvorrichtung mit in Nicken und Rollen ausgekuppelten Gelenken montiert für die Einstellwinkelsteuerung der Rotorblätter eines Drehflügelflugzeuges
Swashplate device supported on mounts decoupled in pitch and roll, for the rotor blades pitch control of a rotorcraft

(30) Priorité: 14.05.1990 FR 9006009
(43) Date de publication de la demande: 21.11.1991
(73) Titulaire: AEROSPATIALE Société Nationale Industrielle, 75781 Paris Cédex 16 (FR)
(72) Inventeur: Leman, Jean-Luc, F-13100 Aix-En-Provence (FR)
(74) Mandataire: Phélip, Bruno

(56) Documents cités:
- EP-A- 0 162 773
- FR-A- 2 019 335
- GB-A- 2 163 395

## Description

La présente invention concerne les dispositifs de commande du pas des pales de rotors, et se rapporte plus précisément à un dispositif à plateaux cycliques montés sur articulations découplées en tangage et roulis, pour la commande du pas collectif, ou général, et du pas cyclique des pales d'un rotor de giravion, et en particulier d'un rotor principal ou sustentateur d'hélicoptère.

Plus précisément, l'invention a pour objet un dispositif de ce type, dans lequel les plateaux cycliques, notamment, sont réalisés et montés selon une disposition particulière d'articulation et de coulissement vis-à-vis de l'arbre d'un rotor sustentateur ou principal d'hélicoptère, afin de commander les pas collectif et cyclique des pales de ce rotor.

Il est bien connu que les variations de la force de sustentation délivrée par un rotor principal de giravion sont obtenues en faisant varier simultanément et dans le même sens l'incidence de toutes les pales de ce rotor (commande du pas collectif), et que le pilotage d'un giravion, dont l'arbre de chaque rotor de sustentation est maintenu en position fixe sur la structure du giravion, est assuré en faisant varier cycliquement le pas des pales (commande du pas cyclique) de ce ou ces rotors.

Afin de transmettre les ordres de commande du pas collectif et du pas cyclique aux pales d'un rotor, il a déjà été proposé d'utiliser des dispositifs comprenant deux plateaux annulaires assemblés par au moins un roulement à billes et montés concentriques autour de l'arbre du rotor destiné à être entraîné en rotation autour de son axe, et dont l'un est un plateau non-tournant, immobilisé en rotation par au moins un organe de liaison inférieur fixé à au moins un carter rigidement lié à la structure du giravion, ledit plateau non-tournant étant monté, d'une part, déplaçable en translation axiale le long d'un guide-plateaux tubulaire fixe, coaxial à l'arbre rotor et entourant une partie de ce dernier, et, d'autre part, oscillant par rapport à cet arbre rotor, autour d'un axe de basculement longitudinal et d'un axe de basculement latéral des plateaux, qui sont perpendiculaires l'un à l'autre et chacun à l'axe de rotation de l'arbre rotor, par l'intermédiaire d'un mécanisme d'articulation, tandis que l'autre plateau est un plateau tournant, destiné à être entraîné en rotation avec l'arbre du rotor par au moins un organe de liaison supérieur fixé à l'arbre et/ou au moyeu du rotor, ledit plateau tournant étant relié au levier de commande du pas de chacune des pales du rotor par une bielle de pas, le plateau non-tournant étant sollicité par des organes de commande du pas collectif, qui commandent ses déplacements en translation le long du guide-plateaux, ainsi que par des organes de commande du pas cyclique, qui commandent ses oscillations par rapport à l'arbre rotor, de sorte que le plateau tournant, qui suit les mouvements du plateau non-tournant, transmet ces mouvements aux leviers de commande du pas des pales par l'intermédiaire des bielles de pas.

Ainsi, une commande de pas collectif est obtenue par une translation axiale d'ensemble des plateaux, assurée par glissement axial, le long du guide-plateaux qui entoure l'arbre rotor, et une commande de pas cyclique est obtenue par une inclinaison d'ensemble des plateaux par rapport à l'axe de l'arbre rotor, grâce à ce mécanisme d'articulation.

Par le brevet français 2 227 175, on connait déjà un dispositif de commande du genre précité, dans lequel l'entraînement en rotation du plateau tournant, et le centrage, le basculement et la translation des deux plateaux par rapport à l'arbre du rotor sont obtenus par deux paires de bielles en ciseaux ou compas de suspension, qui sont diamétralement opposés pour chaque paire, et décalés de 90° en direction circonférentielle par rapport aux compas de l'autre paire, chacun des compas étant articulé à rotule par son extrémité externe sur le plateau tournant, en position radiale interne par rapport au plateau non-tournant, deux compas opposés d'une paire étant liés directement par leur extrémité interne à l'arbre rotor, tandis que les deux autres compas sont également liés à cet arbre rotor par leur extrémité interne, mais par l'intermédiaire d'un palier lamifié à élastomère, qui comporte une portée externe métallique liée au compas correspondant et une portée interne également métallique liée à l'arbre rotor, une garniture en élastomère étant interposée entre ces deux portées, en vue de permettre, par ses déformations en cisaillement, un écart angulaire par rapport à l'arbre dans le plan de rotation du plateau tournant.

Ce dispositif présente l'inconvénient majeur de comporter des organes de centrage et d'entraînement rotatifs, qui sont donc sollicités dynamiquement à la vitesse de rotation du rotor, de sorte que, lorsque ce rotor est fortement incliné, ce qui correspond au cas de fonctionnement le plus fréquent puisqu'il s'agit de la configuration en vol de croisière, les mouvements des articulations des compas sont importants et très défavorables à une bonne tenue en endurance.

Dans le brevet français 2 569 387, ayant pour objet un dispositif de commande analogue, des fonctions similaires de retenue en rotation du plateau non-tournant vis-à-vis d'un élément fixe de la structure de l'aérodyne, et de centrage, de basculement et de translation des deux plateaux sont assurées par des rayons ou lames flexibles et torsibles, qui sont montés, d'une part, rigidement sur la structure de l'aérodyne, et, d'autre quart, sur le plateau non-tournant par l'intermédiaire d'un double palier lamifié cylindro-rectangulaire ou sphérico-rectangulaire, disposé à l'extrémité de chaque rayon. Ces paliers de liaison lamifiés jouent un rôle tout à fait secondaire, dans la mesure où ils sont uniquement destinés à permettre l'allongement et le cambrage des rayons ou lames souples précités, lors du basculement et/ou lors de la translation du plateau non-tournant, dont ces lames assurent le centrage et la retenue en rotation.

De plus, selon le brevet 2 564 057, au nom de la demanderesse, et qui concerne également un dispositif de commande de ce type, ledit mécanisme d'articulation comprend au moins trois ensembles déformables lamifiés, répartis autour de l'arbre rotor et constitués chacun d'un empilement alterné de coupelles d'un matériau rigide et de couches d'un matériau élastique autorisant, par déformation en cisaillement du matériau élastique, les oscillations des plateaux tournant et non-tournant par rapport à l'arbre, afin de commander le pas cyclique.

Pour commander le pas collectif, les trois ensembles déformables lamifiés sont solidaires d'une bague commune montée coulissante le long d'un guide-plateaux fixe, solidaire d'un carter rigidement lié à la structure du giravion, et en forme de cylindre de section circulaire monté coaxial autour d'une partie de l'arbre rotor. Chaque ensemble déformable lamifié comprend un plot lamifié en forme de portion de sphère, dont les coupelles de matériau rigide et les couches de matériau élastique sont des portions de calottes sphériques, pour assurer un bon positionnement radial des plateaux cycliques, une raideur convenable vis-à-vis des efforts radiaux ainsi qu'une souplesse suffisante en rotation angulaire des plots par cisaillement du matériau élastique, ledit plot lamifié étant solidarisé, d'une part, à une armature interne cintrée en arc de cercle, qui s'assemble aux armatures internes des autres ensembles déformables lamifiés afin de constituer la bague commune coulissant sur le guide-plateaux constitué de deux coquilles hémi-cylindriques assemblées l'une à l'autre autour de l'arbre rotor, et, d'autre part, à une armature externe assemblée à la bague interne du ou des roulements à billes reliant les deux plateaux.

Dans les différentes réalisations des dispositifs de commande à plateaux cycliques décrits dans les brevets présentés ci-dessus, comme d'ailleurs dans les réalisations plus conventionnelles de tels dispositifs, dans lesquels les plateaux cycliques sont articulés par le plateau non-tournant sur une rotule montée coulissante axialement autour de l'arbre-rotor, le plateau non-tournant étant retenu par au moins un compas non-tournant et le plateau tournant étant entraîné en rotation avec l'arbre par au moins un compas tournant, ou encore comme dans le brevet français 2 570 673 de la demanderesse, dans lequel le mécanisme de guidage en translation axiale et en déplacement angulaire ainsi que de retenue en rotation du plateau non-tournant et le mécanisme d'entraînement en rotation du plateau tournant sont constitués par deux jeux de lames souples et cintrées de suspension et de centrage des plateaux, dont l'un comprend au moins une lame reliant la structure au plateau non-tournant, et l'autre au moins une lame, mais de préférence plusieurs, reliant le plateau tournant à l'arbre ou au moyeu du rotor, l'ensemble du dispositif doit assurer, en plus des fonctions de blocage en rotation du plateau non-tournant, d'entraînement en rotation du plateau tournant, et de permettre la translation axiale des deux plateaux pour la commande du pas collectif, les deux autres fonctions, nécessaires au pilotage de l'hélicoptère en tangage et en roulis, et consistant à permettre les débattements angulaires des plateaux autour de l'axe de la commande (principale) de tangage, ou axe de basculement des plateaux cycliques en commande de tangage, ou encore axe de commande en oscillation longitudinale des plateaux, appelé axe de basculement longitudinal dans la suite du présent mémoire descriptif, et enfin à permettre les débattements angulaires des plateaux autour de l'axe de la commande (secondaire) de roulis, ou axe de basculement des plateaux cycliques en commande de roulis, ou encore axe de commande en oscillation latérale des plateaux, appelé axe de basculement latéral dans la suite du présent mémoire descriptif.

En général, les deux plateaux sont déplacés en translation axiale et/ou en basculement par trois actionneurs linéaires de commandes pilotes, qui sont reliés au levier de pas collectif et au manche de pas cyclique manoeuvrés par le pilote par une chaîne de commande de collectif, une chaîne de commande de tangage et une chaîne de commande de roulis formées de bielles rigides raccordées fonctionnellement entre elles par des renvois, des relais et combinateurs.

Dans tous les dispositifs de commande de l'état de la technique mentionnés ci-dessus, les moyens d'articulation permettant les mouvements des plateaux autour de l'axe de basculement latéral, dont l'amplitude est environ trois fois plus faible que celle des mouvements des plateaux autour de l'axe de basculement longitudinal, sont simultanément les moyens d'articulation qui permettent précisément ces mouvements des plateaux autour de cet axe de basculement longitudinal, de sorte que ces moyens d'articulation, définissant en commun les deux axes perpendiculaires de rotulage des plateaux, ne peuvent pas être optimisés pour chacun de ces deux types de mouvements.

Par la présente invention, on se propose de remédier aux inconvénients des dispositifs précités de l'état de la technique et/ou de perfectionner ces dispositifs.

En particulier, l'invention a pour but de proposer un dispositif de commande à plateaux cycliques dans lequel les moyens autorisant les basculements latéraux des plateaux, d'assez faible amplitude, sont découplés des moyens autorisant leurs basculements longitudinaux, de plus grande amplitude, de façon à permettre une meilleure adaptation et une optimisation de ces différents moyens à leurs différentes fonctions spécifiques, et donc d'obtenir une meilleure fiabilité et tenue en endurance du dispositif de commande, sans cependant d'augmentation notable de sa complexité ni de son encombrement.

En outre, à l'image du brevet français 2 564 057, un autre but de l'invention est d'obtenir que les pièces du mécanisme d'articulation des plateaux par rapport à l'arbre rotor soient peu sollicitées, afin d'augmenter encore leur longévité et de diminuer la fréquence des interventions de maintenance.

Un autre but encore de l'invention est d'obtenir que pratiquement toutes les pièces susceptibles d'usure du dispositif de commande des pas collectif et cyclique des pales puissent être changées individuellement, sans démontage du mât rotor.

Un autre but encore de l'invention est de supprimer les risques de coincement de la commande, et toute lubrification à l'huile ou à la graisse du dispositif de commande.

Mais, de manière encore plus spécifique à la présente invention, un but de celle-ci est de libérer de manière optimale la partie centrale du dispositif de commande, de sorte que l'arbre du rotor, lorsqu'il joue simultanément le rôle de mât support de moyeu, peut être doté d'un diamètre relativement important et d'une faible épaisseur, de manière à dégager, à l'intérieur de l'arbre rotor, un grand volume disponible pour pouvoir facilement loger des équipements complémentaires, tels qu'un organe de fixation et de câblage d'un viseur de mât pour un hélicoptère militaire.

A ce propos, il convient de noter que, dans les brevets français 2 227 175 et 2 569 387, l'encombrement des bielles en ciseaux ou des lames est important à l'intérieur de la couronne formée par les plateaux tournant et non-tournant, et n'autorise pas de ce fait le passage à l'intérieur de cette couronne d'un mât de grand diamètre.

A l'effet de remédier aux inconvénients et de résoudre les problèmes présentés ci-dessus, l'invention propose un dispositif de commande du pas collectif et du pas cyclique des pales d'un rotor de giravion, du type mentionné au début du présent mémoire descriptif, et qui se caractérise par le fait que le mécanisme d'articulation comprend, d'une part, deux rotules disposées en positions diamètralement opposées de part et d'autre de l'axe de rotation de l'arbre rotor et de part et d'autre de l'axe de basculement latéral, et centrées sur l'axe de basculement longitudinal, chacune des deux rotules étant retenue entre un support de plateaux, monté coulissant le long du guide-plateaux, et le plateau non-tournant, de façon à permettre les oscillations de ce dernier autour de l'axe de basculement longitudinal, et, d'autre part, deux ensembles de liaison, rigides à l'encontre des sollicitations en couple autour de l'axe de l'arbre rotor, mais déformables dans une direction sensiblement parallèle à l'axe de rotation de l'arbre rotor, et dont chacun est monté entre l'une respectivement des rotules et le support de plateaux, de façon à permettre les oscillations du plateau non-tournant autour de l'axe de basculement latéral, par les déformations différentielles des deux ensembles de liaison.

Le dispositif proposé par l'invention assure ainsi simultanément le basculement de l'ensemble des plateaux tournant et non-tournant autour de l'axe de la commande de tangage, le basculement de ce même ensemble de plateaux autour de l'axe de la commande de roulis, la translation verticale de cet ensemble de plateaux, l'entraînement en rotation du plateau tournant et le blocage en rotation du plateau non-tournant. Grâce à la structure propre à l'invention, dans laquelle les articulations sont réalisées entre des organes non-tournants, ces articulations sont peu sollicitées, puisqu'en fonctionnement elles travaillent en statique. De plus, ce mécanisme d'articulation à base d'ensembles de liaison déformables et de rotules supprime tous risques de coincement de la commande au niveau des oscillations des plateaux par rapport à l'arbre du rotor. Un autre avantage significatif découlant du dispositif selon l'invention réside dans le découplage entre les moyens d'articulation autorisant les deux mouvements de basculement nécessaires. En effet, le mécanisme d'articulation conforme à l'invention est ainsi conçu qu'il réalise un découplage entre les moyens d'articulation autorisant les basculements latéraux et les moyens d'articulation autorisant les basculements longitudinaux du plateau non-tournant, de sorte que les ensembles de liaison déformables de ce mécanisme d'articulation, quine sont soumis qu'à des déformations latérales de faible amplitude, ne subissent que de faibles sollicitations, ce qui permet une conception compacte de ces ensembles de liaison. Les deux mouvements de basculement du plateau non-tournant, et donc aussi du plateau tournant, sont permis par deux ensembles différents de moyens, l'un comprenant deux rotules, qui peuvent être de petite taille, pour la commande principale qui est la commande longitudinale, et l'autre comportant des pièces déformables, et de préférence souples à cet effet, pour la commande secondaire, qui est la commande latérale. En effet, le mouvement de basculement de l'ensemble des plateaux tournant et non-tournant autour de l'axe de commande latérale étant environ trois fois plus faible que le mouvement de basculement de ces plateaux autour de l'axe longitudinal, les basculements latéraux peuvent convenablement être permis par les ensembles de liaison déformables, qui sont rigides à l'encontre des sollicitations en couple autour de l'axe de l'arbre rotor, alors que les rotules d'articulation accepteront d'autant plus facilement des basculements longitudinaux de plus grande amplitude qu'elles sont centrées sur l'axe de basculement longitudinal du plateau non-tournant. Les ensembles de liaison ne subissent qu'une déformation latérale limitée, et sont soumis à des sollicitations faibles, ce qui permet une conception compacte du dispositif de commande.

En outre,le dispositif conforme à l'invention permet le montage des plateaux cycliques autour d'un arbre rotor de grand diamètre, du fait que les différents moyens du mécanisme d'articulation sont implantés entre le support de plateaux et le plateau non-tournant, et n'encombrent donc pas le volume délimité à l'intérieur de ce support de plateaux et du guide-plateaux. Ceci résulte de l'utilisation, propre à l'invention, d'ensembles différents de moyens d'articulation pour définir les deux axes perpendiculaires l'un à l'autre de rotulage des plateaux.

Dans le dispositif de commande selon l'invention, chacun des ensembles de liaison peut comprendre au moins un mécanisme coulissant autolubrifié à au moins un patin glissant sur au moins un rail, l'un des deux organes que sont le rail et le patin étant lié à la rotule correspondante et l'autre étant lié au support de plateaux.

Avantageusement cependant, afin d'améliorer la fiabilité, chacun desdits ensembles de liaison comporte au moins un plot lamifié, comprenant au moins un empilement alterné d'au moins une lamelle d'un matériau rigide et d'au moins deux couches d'un matériau élastiquement déformable, le plot lamifié étant maintenu entre le support de plateaux et une cage externe de la rotule correspondante, de sorte que par la déformation du matériau élastiquement déformable, les rotule et cage externe sont déplaçables dans une direction sensiblement parallèle à l'axe de rotation et par rapport au support de plateaux, afin de permettre les oscillations des plateaux autour de l'axe de basculement latéral.

Afin de faciliter le montage des plots lamifiés, les lamelles et couches de chaque empilement alterné sont retenues avantageusement entre une armature rigide externe, reliée à une patte de retenue solidaire du support de plateaux, et une armature rigide interne reliée à la cage externe de la rotule correspondante.

Afin de permettre une fixation réglable et avantageusement simple et peu coûteuse de l'armature externe sur la patte de retenue, l'armature externe présente, du côté opposé à l'armature interne, un bossage de retenue engagé dans un évidement d'un organe fileté vissé sur cette patte de retenue.

Les mêmes avantages sont obtenus au niveau de la fixation de l'armature interne sur la cage externe de la rotule correspondante si, conformément à l'invention, l'armature interne présente, du côté opposé à l'armature externe, un épaulement et une partie taraudée qui sont aménagés de part et d'autre d'une portée en regard de laquelle la cage externe est fixée sur l'armature interne en étant maintenue en butée contre l'épaulement par le vissage d'un organe fileté dans la partie taraudée.

Avantageusement, afin que les plots lamifiés participent efficacement à la retenue en rotation du plateau non-tournant, chaque empilement alterné est de préférence centré sur un axe passant par le centre de la rotule correspondante et perpendiculaire au plan défini par les axes de rotation et de basculement longitudinal.

Compte tenu de l'amplitude relativement faible des oscillations angulaires autour de l'axe de basculement latéral, et afin de permettre une réalisation avantageusement compacte des plots lamifiés, chaque empilement alterné comprend des lamelles rigides et des couches déformables qui sont planes et qui s'étendent sensiblement parallèlement au plan défini par les axes de rotation et de basculement longitudinal, de façon à permettre les oscillations des plateaux autour de l'axe de basculement latéral par cisaillement des couches déformables des plots lamifiés.

Avantageusement, afin d'équilibrer les efforts s'exerçant sur les différents éléments du mécanisme d'articulation, chaque plot lamifié comprend deux empilements alternés, disposés de part et d'autre de la rotule correspondante, et entre deux pattes de retenue en saillie sur le support de plateaux, de part et d'autre de l'axe de basculement longitudinal. En outre, les deux empilements alternés et les deux pattes de retenue sont avantageusement disposés respectivement symétriquement l'un ou l'une de l'autre par rapport à l'axe de basculement longitudinal, les deux pattes de retenue s'étendant de plus sensiblement parallèlement à cet axe.

Afin de faciliter la réalisation de chaque plot lamifié, les deux empilements de ce plot ont avantageusement des armatures externes qui constituent deux parties opposées d'une même pièce tubulaire rigide externe, qui enveloppe les deux empilements du plot lamifié correspondant ainsi que la rotule correspondante et sa cage externe.

De même, il est avantageux que les deux empilements présentent des armatures internes qui constituent deux parties opposées d'une même pièce tubulaire rigide interne, dans l'évidement central de laquelle sont logées la rotule correspondante et sa cage externe, cette dernière étant retenue avantageusement contre un épaulement en saillie vers l'intérieur de l'évidement par le vissage d'un écrou extérieurement fileté dans une partie d'extrémité taraudée de cet évidement. Cette structure permet de faciliter la mise en position simultanée des armatures internes des deux empilements alternés autour de la rotule correspondante.

Afin de faciliter le montage de chaque rotule entre le plateau non-tournant et le support de plateaux, chaque rotule est avantageusement montée sur un élément de fixation qui est solidarisé au plateau non-tournant. A cet effet, cet élément de fixation comprend avantageusement une embase cintrée en arc de cercle, qui est appliquée et fixée contre le plateau non-tournant, et une fusée radiale par rapport à l'axe de rotation du rotor, et autour de laquelle la rotule est montée. Ce montage est facilité et avantageusement réalisé pour permettre le basculement des plateaux autour de l'axe de basculement longitudinal si chaque rotule présente un alésage cylindrique central, par lequel elle est engagée coaxialement par rapport à l'axe de basculement longitudinal, autour d'une portée délimitée sur la fusée radiale entre un épaulement et une extrémité filetée de cette fusée, de sorte que la rotule puisse être maintenue en regard de la portée en étant appliquée en butée contre l'épaulement par un écrou vissé sur l'extrémité filetée de la fusée.

Dans un mode de réalisation préféré du dispositif de commande selon l'invention, l'élément de fixation est fixé par son embase cintrée contre la face radiale interne du plateau non-tournant, qui est lui-même en position radiale interne par rapport au(x) roulement(s) et au plateau tournant, et la fusée correspondante s'étend radialement vers l'intérieur et présente son extrémité filetée en regard du support de plateaux et en position radiale interne par rapport à son épaulaient de butée pour la rotule, tandis que l'épaulement de butée pour la cage externe correspondante sur l'armature interne d'au moins un empilement alterné correspondant est en position radiale interne, vers l'axe de rotation et par rapport à la partie taraudée de l'armature interne dans laquelle est vissé l'organe fileté maintenant la cage externe sur cette armature interne, l'armature externe correspondante étant dans ce cas solidarisée à la patte de retenue correspondante, qui est en saillie radiale vers l'extérieur sur le support de plateaux.

Avantageusement, chaque organe de liaison supérieur, destiné à entraîner le plateau tournant en rotation avec l'arbre rotor, est un compas tournant articulé sur le plateau tournant par une rotule, dont le centre et les centres des rotules de basculement des plateaux autour de l'axe de basculement longitudinal sont contenus dans un même plan, défini par les axes de basculement longitudinal et latéral. Avantageusement de même, les bielles de pas sont articulées sur le plateau tournant par des rotules dont les centres et les centres des rotules de basculement des plateaux autour de l'axe de basculement longitudinal sont contenus dans ce même plan, défini par les axes de basculement longitudinal et latéral.

Avantageusement en outre, afin de pouvoir se dispenser de compas non-tournant pour retenir le plateau non-tournant en rotation, le support de plateaux monté coulissant le long du guide plateaux fixe est un organe tubulaire monté sensiblement coaxialement autour du guide-plateaux, et présentant des cannelures axiales internes en prise avec des cannelures axiales externes, de forme correspondante, du guide-plateaux, afin de guider les translations axiales, parallèlement à l'axe de rotation, du support de plateaux par rapport au guide plateaux, tout en empêchant toute rotation relative du support de plateaux et du guide plateaux autour de l'axe de rotation, de sorte que le guide plateaux constitue simultanément l'organe de liaison inférieur, fixé au carter rigidement lié à la structure du giravion, pour immobiliser le plateau non-tournant en rotation. Ce montage a pour avantage supplémentaire que les déplacements en coulissement s'effectuent sur des pièces non-tournantes de façon à limiter l'usure de ces pièces sous les mouvements et efforts dynamiques.

Enfin, pour réaliser avantageusement l'ancrage de l'arbre rotor dans le carter de la boîte de transmission principale de l'hélicoptère et faciliter simultanément la réalisation du guide plateaux, les cannelures axiales externes de ce dernier s'étendent le long d'un tronçon supérieur, en forme de cylindre de section circulaire, de ce guide plateaux, qui comporte une partie d'extrémité inférieure tronconique, évasée vers le carter, et présentant un épaulement radial externe boulonné sur le carter, ainsi qu'une collerette de centrage sur ce carter, qui assure la retenue annulaire d'une bague externe d'un unique roulement de portance, dans lequel est encastrée l'extrémité inférieure de l'arbre rotor.

L'invention sera mieux comprise à l'aide d'un exemple particulier de réalisation, décrit ci-après à titre non limitatif, en référence aux dessins annexés, dans lesquels :
- la figure 1 représente une vue essentiellement en coupe verticale brisée passant par l'axe de rotation, et partiellement en élévation latérale avec arrachement partiel, d'un mât rotor d'hélicoptère équipé du dispositif de commande de pas conforme à l'invention et comportant des plateaux cycliques montés sur articulations rotulo-lamifiées,
- la figure 2 est une vue partiellement en plan et partiellement en coupe transversale du dispositif de la figure 1, et
- la figure 3 est une vue à échelle agrandie d'un détail de la figure 2.

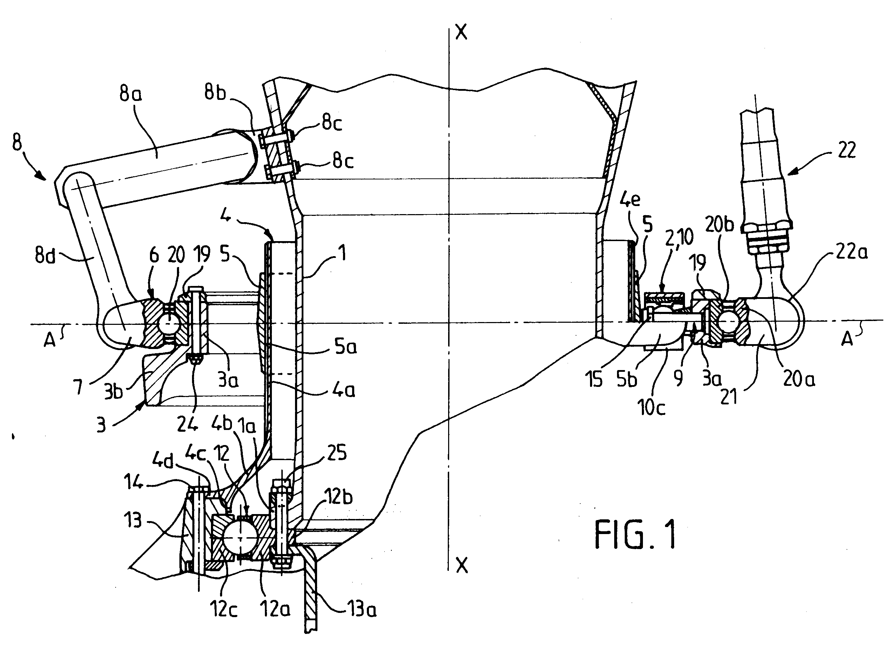

En référence aux figures 1 à 3, le mât rotor, qui est à titre d'exemple celui d'un rotor sustentateur quadripale d'un hélicoptère, comprend un arbre tubulaire 1 ayant, dans cet exemple, une partie centrale cylindrique et une partie supérieure tronconique, et qui est entraîné en rotation autour de son axe X-X par sa partie inférieure (partiellement représentée) en prise avec la sortie de la boîte de transmission principale de l'hélicoptère. La liaison rigide de l'arbre 1 du rotor avec la boîte de transmission principale est assurée à l'intérieur d'un carter 13, recouvrant la partie supérieure de la boîte de transmission principale, et solidaire de la structure de l'hélicoptère. Dans le carter 13, l'arbre 1 est ancré dans un unique roulement de portance 12, qui supporte, en vol, la portance et les moments de basculement du rotor et les transmet à la structure de l'hélicoptère, et qui, au sol, supporte le poids de ce rotor. Cet ancrage est assuré au niveau de l'extrémité inférieure de l'arbre 1, agencée en collet la en saillie radiale et surépaissie vers l'extérieur de cet arbre, par une couronne d'ensembles vis-écrou 25 qui traversent axialement ce collet la pour le solidariser d'une part, à un collet radial externe de l'extrémité supérieure d'un arbre 13a de sortie de la boîte de transmission principale, pour l'entraînement en rotation de l'arbre 1, et, d'autre part, à une bride radiale interne 12b de la bague interne 12a de ce roulement de portance 12, dont la bague externe 12c est elle-même ancrée dans le carter 13. Le rotor (non représenté) est, de façon classique, solidaire de l'extrémité supérieure de l'arbre 1 par un moyeu, auquel plusieurs pales, quatre dans cet exemple, sont reliées chacune par son emplanture équipée d'un levier de commande de l'incidence ou du pas de la pale correspondante. Dans l'exemple représenté sur la figure 1, l'arbre rotor 1 et le moyeu peuvent être réalisés sous la forme d'un mât moyeu tubulaire intégré, tel que décrit, par exemple, dans les brevets français 2 584 995 et 2 584 996 de la demanderesse, auxquels on se reportera pour davantage de précisions.

Autour de l'arbre 1 est monté coaxialement un guide-plateaux 4 fixe qui comprend, autour de la partie centrale cylindrique de l'arbre rotor 1, un tronçon supérieur 4a ayant extérieurement la forme d'un tronc de cylindre de section circulaire, et dont la base se prolonge vers le carter 13 par une partie en forme de jupe tronconique 4b divergent vers le carter 13, et se terminant par une collerette axiale 4c de centrage dans l'ouverture supérieure ménagée dans le carter 13 pour le passage de l'arbre 1 et par un épaulement radial externe 4d par lequel le guide-plateaux 4 est solidarisé sur le carter 13 au moyen d'une couronne de vis 14. La face externe du tronçon supérieur cylindrique 4a du guide-plateaux 4, qui, comme le carter 13, est par exemple réalisé en alliage léger, présente des cannelures axiales 4e. Celles-ci sont en prise avec des cannelures axiales 5a de forme complémentaire usinées sur la face interne d'un support de plateaux 5 qui est tubulaire et présente un alésage central cylindrique de section circulaire, et dont la face externe est de forme légèrement biconique, ce support de plateaux 5 étant monté autour du guide-plateaux 4 de façon à permettre la retenue en rotation et le coulissement axial de ce support 5 le long du guide-plateaux 4, de sorte que ce support 5 forme ainsi un élément de retenue d'un plateau non-tournant 3, ainsi bloqué en rotation autour de l'axe X-X de l'arbre rotor et qu'il supporte de la manière décrite ci-dessous.

En plus du plateau non-tournant 3 mentionné ci-dessus, le dispositif de commande du pas collectif et du pas cyclique des pales du rotor comprend également un plateau tournant 6. Les deux plateaux 3 et 6 sont annulaires, assemblés par un unique roulement à billes 20 de grand diamètre et montés concentriques avec un espacement radial autour du support de retenue coulissant 5, du guide-plateaux 4 et de l'arbre rotor 1. Le plateau non-tournant 3, en position radiale interne par rapport à l'autre plateau 6 et au roulement 20, est immobilisé en rotation par le support 5 et le guide-plateaux 4, fixé au carter 13 rigidement lié à la structure de l'hélicoptère, et ce plateau non-tournant 3 est monté, d'une part, déplaçable en translation axiale selon l'axe X-X de l'arbre 1 par coulissement du çsupport 5 le long du guide-plateaux 4, et, d'autre part, oscillant par rapport à cet arbre 1 par l'intermédiaire d'un mécanisme d'articulation, qui est décrit ci-après. L'autre plateau, en position radiale externe par rapport au roulement 20 et au plateau non-tournant 3, est un plateau tournant 6, destiné à être entraîné en rotation avec l'arbre 1 du rotor par deux organes de liaison supérieurs, agencés en compas d'entraînement ou compas tournants 8, montés en positions diamétralement opposées par rapport à l'axe X-X de l'arbre 1, et dont la branche supérieure 8a de chacun est reliée à l'arbre 1 par l'intermédiaire d'une chape 8b, solidarisée à cet arbre 1 par des vis telles que 8c, et sur laquelle la branche supérieure 8a pivote autour d'un axe perpendiculaire au plan diamétral de l'arbre 1, passant par son axe X-X et par le milieu de la chape 8b, tandis que la branche inférieure 8d de chaque compas tournant 8, articulée à pivotement par son extrémité supérieure, conformée en chape, sur l'extrémité inférieure de la branche supérieure 8a autour d'un axe parallèle à l'axe de pivotement de l'extrémité supérieure de la branche supérieure 8a dans la chape 8b, est articulée à son extrémité inférieure par une rotule 7a dans une chape 7 dont les deux branches parallèles sont en saillie sensiblement radiale vers l'extérieur sur le plateau tournant 6.

Ce plateau tournant 6 présente également d'autres chapes radiales externes 21, en nombre égal au nombre des pales du rotor, soit quatre chapes 21 dans cet exemple, qui sont régulièrement réparties en direction circonférentielle sur la périphérie du plateau tournant 6, et décalées dans cette direction par rapport aux deux chapes 7 d'articulation des compas tournants 8. Dans chacune des chapes 21 est articulé l'embout à rotule 22a formant l'extrémité inférieure d'une bielle de pas 22, de longueur fixe mais réglable pour permettre le réglage aérodynamique du rotor, et dont l'embout à rotule (non représenté) de l'extrémité supérieure est articulé sur le levier de commande de pas d'une pale correspondante du rotor (également non représenté).

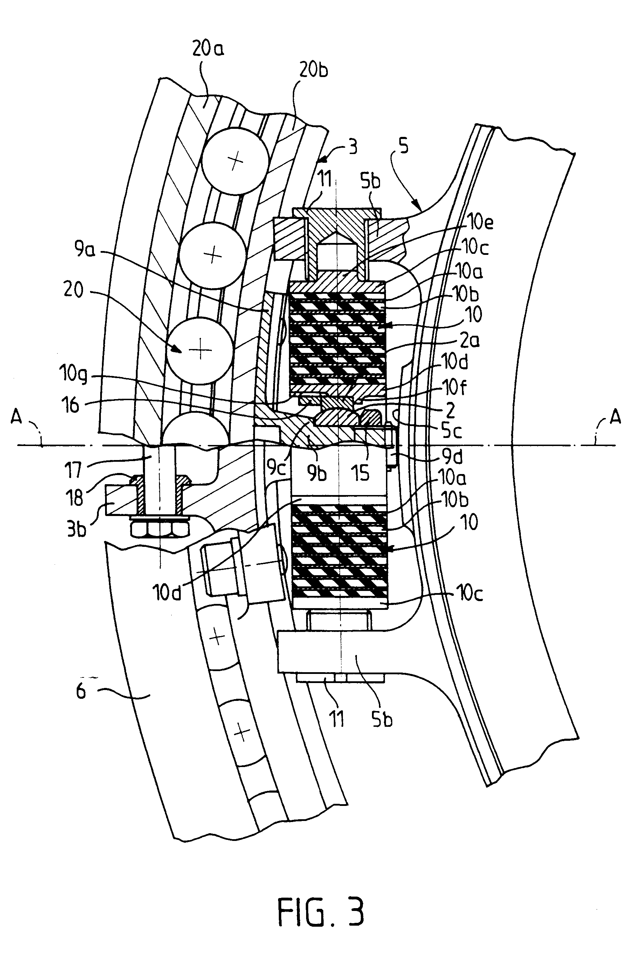

De manière connue, le plateau non-tournant 3 est sollicité par des organes de commande du pas collectif, qui commandent ses déplacements en translation le long du guide-plateaux 4, ainsi que par des organes de commande du pas cyclique, qui commandent ses oscillations par rapport à l'arbre 1, de sorte que le plateau tournant 6, qui suit les mouvements du plateau non-tournant 3, transmet ces mouvements aux leviers de commande de pas des pales du rotor, par l'intermédiaire des bielles de pas 22. Ces organes de commande du pas collectif et du pas cyclique sont constitués par des actionneurs linéaires, tels que trois bielles de commande ou trois vérins de servo-commande (non représentés) montés de manière classique entre la structure de l'hélicoptère et le plateau non-tournant 3, sur lequel chacun d'eux est articulé par une rotule retenue par un axe transversal dans une chape solidaire du plateau non-tournant 3, comme décrit ci-après en référence à la figure 3.

Selon l'invention, le mécanisme d'articulation comprend deux rotules 2 diamétralement opposées par rapport à l'axe de rotation X-X de l'arbre 1 et à l'axe B-B de basculement latéral des plateaux 3 et 6, qui est l'axe de basculement de la commande en roulis, les deux petites rotules 2 étant de plus chacune centrée sur l'axe A-A de basculement longitudinal des plateaux 3 et 6, qui est l'axe de basculement de la commande en tangage, perpendiculaire aux axes X-X et B-B, et chacune retenue, de la manière décrite plus précisément ci-dessous, entre le support de retenue 5 du plateau non-tournant 3 et un élément de fixation 9 à ce plateau 3. Par ailleurs, le basculement du plateau non-tournant 3 autour de l'axe de basculement latéral est permis par deux ensembles de liaison,rigides à l'encontre des sollicitations en couple autour de l'axe X-X de l'arbre 1, mais déformables dans une direction sensiblement parallèle à l'axe X-X,et dont chacun est interposé entre une rotule 2 respective et le support de retenue5.

Comme représenté sur les figures 1 à 3, chaque ensemble de liaison est réalisé sous la forme d'un plot lamifié à deux empilements 10 de couches flexibles et de lames rigides en alternance, qui sont disposés de part et d'autre de la rotule 2 correspondante et selon une direction coupant l'axe A-A et perpendiculaire au plan défini par cet axe A-A et l'axe de rotation X-X, chaque paire d'empilements 10 d'un plot lamifié étant retenue, radialement vers l'extérieur par rapport à l'axe A-A, entre deux pattes de retenue 5b en saillie vers l'extérieur sur le support de plateaux 5 et parallèles l'une à l'autre et à l'axe A-A, tandis que les deux empilements 10 de chaque plot lamifié sont retenus, radialement vers l'intérieur par rapport à l'axe A-A, sur une cage externe 2a de la rotule 2 correspondante.

Plus précisément, chaque demi-plot lamifié 10 comprend un empilement alterné de lamelles 10a d'un matériau rigide et de couches 10b d'un matériau élastiquement déformable, tel qu'un élastomère, les lamelles 10a et les couches 10b étant planes et parallèles au plan défini par les axes X-X et A-A, et accolées les unes aux autres par vulcanisation ou adhérisation, de façon qu'au repos chaque empilement 10 soit centré sur l'axe passant par le centre de la rotule 2 et perpendiculaire au plan défini par les axes X-X et A-A, et cet empilement 10 est solidarisé par les deux couches élastiques 10b d'extrémité, d'une part, contre la face interne, par rapport à l'axe A-A, d'une armature rigide externe 10c, liée à la patte de retenue 5b correspondante, et, d'autre part, contre la face externe, par rapport à l'axe A-A, d'une armature rigide interne 10d, liée à la cage externe 2a dans laquelle est articulée la rotule 2 correspondante.

L'armature rigide externe 10c présente, en saillie sur sa face externe (du côté opposé à la rotule 2), un bossage cylindrique 10e, qui est engagé centré et retenu dans un alésage central borgne de la tige d'une vis de blocage 11, vissée dans un alésage taraudé traversant la patte de retenue 5b coaxialement à l'empilement 10, de sorte que la tête de la vis 11 prenne appui contre la face externe de la patte 5b et que la tige de la vis 11 traverse l'alésage taraudé de cette patte 5b et fait saillie par son extrémité à l'intérieur de cette patte 5b, vers l'axe A-A. Eventuellement, les deux armatures externes 10c sont deux côtés opposés d'une même pièce métallique tubulaire externe, de section rectangulaire, qui enveloppe les deux empilements 10 d'un plot lamifié et la rotule 2 correspondante.

Chacune des rotules est montée sur le plateau non-tournant 3 par un élément de fixation 9, qui comporte une embase cintrée en arc de cercle 9a, s'étendant symétriquement par rapport à la rotule 2, de part et d'autre de l'axe A-A et en regard des empilements lamifiés 10, et dont la face radiale externe (par rapport à l'axe X-X) est convexe et présente une courbure qui correspond à celle de la face radiale interne concave du plateau non-tournant 3, contre laquelle elle est appliquée par des vis de fixation de l'embase cintrée 9a sur le plateau non-tournant 3. Chaque élément de fixation 9 comprend également une fusée centrale 9b, qui s'étend radialement vers l'intérieur (par rapport à l'axe X-X) et coaxialement autour de l'axe A-A, entre le plateau non-tournant 3 et une surface de contact 5c en saillie radiale vers l'extérieur par rapport à l'axe X-X, sur le support 5, entre les deux pattes de retenue 5b correspondantes.

La rotule 2 correspondante présente un alésage cylindrique central et traversant, par lequel elle est engagée sur la fusée 9b et montée autour d'une portée cylindrique usinée sur la périphérie de cette fusée 9b entre un épaulement radial 9c de cette fusée 9b, du côté de l'embase 9a, et l'extrémité radiale interne extérieurement filetée 9d de cette fusée 9b, sur laquelle est vissé et retenu un écrou 15 freiné et goupillé, maintenant la rotule 2 axialement en position sur la fusée 9b.

Les armatures internes 10d des deux empilements 10 d'un même plot lamifié sont deux parties opposées d'une même pièce métallique tubulaire interne de ce plot, cette pièce présentant un alésage axial cylindrique dans la partie centrale duquel une portée cylindrique lisse a été usinée entre un épaulement radial interne 10f, du côté du support 5, et un taraudage 10g dans la partie d'extrémité tournée vers le plateau non-tournant 3, de sorte que la cage externe 2a de la rotule 2, qui est articulée autour de cette dernière, peut être engagée et retenue dans cette portée lisse entre l'épaulement de butée 10f et un écrou à filetage externe 16, qui est vissé à l'intérieur du taraudage 10g.

Les liaisons entre le roulement 20 et les plateaux tournant 6 et non-tournant 3 sont réalisées de manière connue, par exemple comme décrit dans le FR-A-2 564 057, dont les enseignements à ce propos sont introduits dans le présent mémoire par voie de référence. Les bagues externe 20a et interne 20b du roulement 20, de grande dimension et raidies, constituent simultanément des parties annulaires respectivement du plateau tournant 6 et du plateau non-tournant 3. Comme déjà décrit ci-dessus, les chapes radiales 7 et 21, dans lesquelles sont articulés respectivement les compas tournants 8 et les bielles de pas 22, sont en saillie radiale vers l'extérieur de la bague externe 20a du roulement 20, et d'une seule pièce avec cette bague externe 20a. Mais de plus, ces chapes radiales 7 et 21 sont réalisées de sorte que les centres des rotules 7a de fixation des compas tournants 8 dans les chapes 7, les centres des rotules 22a d'articulation des bielles de pas 22 dans les chapes 21, ainsi que les centres des deux rotules 2 sont coplanaires et situés dans le plan défini par les axes de basculement longitudinal A-A et latéral B-B.

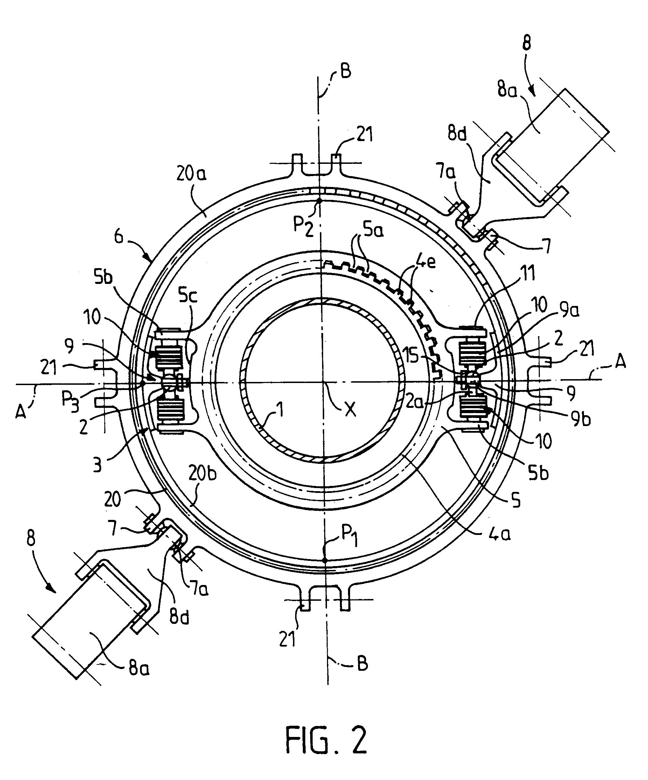

Une couronne 19, appliquée sur la face supérieure de la bague interne 20b du roulement 20, et une partie annulaire 3a, de renfort interne de la bague interne 20b, dont la face inférieure repose contre un épaulement de la partie annulaire 3a, pour former le plateau non-tournant 3, sont fixées sur la bague interne 20b par une couronne d'ensembles vis-écrou 24 freinés et goupillés. La partie annulaire 3a se prolonge radialement vers l'extérieur et vers le bas par des éléments de jupe 3b, aménagés en trois chapes radiales pour l'articulation sur le plateau non-tournant 3 des extrémités supérieures des commandes pilotes (bielles de commande ou vérins de servo-commande). Deux de ces chapes (non représentées) ont leur deux branches parallèles l'une à l'autre et symétriques l'une de l'autre par rapport à l'axe B-B, et ces deux chapes sont diamétralement opposées selon l'axe B-B par rapport à l'axe X-X. Sur la figure 2, on a représenté en P₁ et P₂ les centres des rotules d'articulation de deux des trois commandes pilotes dans ces deux chapes. Sur cette même figure 2, on a représenté en P₃ le centre de la rotule d'articulation de la troisième commande pilote dans la troisième chape d'articulation sur le plateau non-tournant 3, cette troisième chape étant partiellement représentée sur la figure 3. Ses deux branches, dont une seule est visible sur la figure 3, sont parallèles l'une à l'autre et à l'axe A-A, et elles sont reliées l'une à l'autre par un axe de pivot 17, retenant la rotule correspondante, et lui-même monté dans les branches de la chape 3b par des bagues épaulées tel que 18.

Dans le cas de l'utilisation d'une chaîne de commande pure (sans déphaseur), les commandes pilotes longitudinales sont articulées sur le plateau non-tournant 3 au niveau des points P1 et P2 (voir figure 2), tandis que la commande pilote latérale est articulée sur le plateau non-tournant 3 au niveau du point P3.

L'orientation du dispositif selon l'invention, par rapport aux axes de l'hélicoptère, tient compte de l'angle de déphasage pas-battement (voisin de 90°) et de l'angle entre l'axe longitudinal de chaque pale et son axe de commande de pas.

On obtient ainsi un dispositif de commande des pas collectif et cyclique des pales d'un rotor, dans lequel le plateau non-tournant 3 est immobilisé en rotation grâce aux plots lamifiés 10, au support de plateaux 5, et au guide-plateaux fixe 4, en prise avec le support de plateaux 5 par des cannelures axiales, et grâce auquel une action simultanée et égale, exercée dans le même sens par les commandes pilotes sur le plateau non-tournant 3, entraîne l'ensemble constitué par les deux plateaux 3 et 6, le roulement 20, le mécanisme d'articulation à rotules 2 et plots lamifiés 10, ainsi que le support de plateaux 5, en translation le long du guide-plateaux 4. Ce mouvement coulissant est transmis, par traction ou poussée sur les bielles de pas 22, simultanément à tous les leviers de commande du pas, de sorte qu'il permet de commander le pas collectif des pales. Par contre, une action différentielle des commandes pilotes entraîne l'inclinaison d'ensemble des plateaux 3 et 6 et du roulement 20, par rapport à l'axe de rotation X-X, alors que le support de plateaux 5 n'est pas déplacé, ce qui correspond à la transmission d'un pas cyclique, transmis par les bielles de pas 22 aux leviers de commande de pas des pales.

L'intérêt du mécanisme d'articulation décrit ci-dessus, comportant deux articulations rotulo-lamifiées à rotules 2 et plots lamifiés 10, est qu'il procure un découplage entre les mouvements de basculement latéral et les mouvements de basculement longitudinal des plateaux 3 et 6. En effet, les rotules 2, montées chacune au centre d'un plot lamifié, entre les deux empilements alternés 10 de ce dernier, et autour d'une fusée 9b de liaison au plateau non-tournant 3, et coaxiales autour de l'axe de basculement longitudinal A-A, permettent la rotation de ce plateau non-tournant 3, et donc aussi du plateau tournant 6, autour de cet axe A-A, sur lequel les rotules 2 sont centrées, sous l'effet d'une action différenciée des commandes pilotes articulées aux points P1 et P2 sur le plateau non-tournant 3.

Par contre, une action différenciée de la commande pilote articulée au point P3 sur le plateau non-tournant 3, par rapport aux commandes pilotes articulées en P1 et P2, provoque un basculement du plateau non-tournant 3, et donc aussi du plateau tournant 6, autour de l'axe de commande latéral B-B, par déformation en cisaillement des couches d'élastomère 10b, qui permettent un déplacement, sensiblement dans la direction de l'axe de rotation X-X, des armatures internes 10d des empilements 10 avec les rotules 2 et les fusées 9b par rapport aux armatures externes 10c, qui sont retenues sur le support 5. En effet, dans le plot lamifié 10-10 situé d'un côté de l'axe B-B, l'armature interne 10d de chacun des deux empilements 10 de ce plot lamifié est abaissée par rapport à l'armature externe 10c correspondante, tandis que dans le plot lamifié situé de l'autre côté de l'axe B-B, l'armature interne 10d de chaque empilement 10 est relevée par rapport à l'armature externe 10c correspondante, ces déformations différentielles permettant les débattements latéraux des plateaux 3 et 6 autour de l'axe B-B.

Du fait de leur disposition, les plots lamifiés (10-10) entrent également dans la chaîne de blocage en rotation du plateau non-tournant 3, car toute tendance du plateau non-tournant 3 à être entrainé en rotation par le plateau tournant 6 autour de l'axe de rotation X-X sollicite les plots lamifiés en traction-compression, par l'intermédiaire des fusées 9b et des rotules 2 et selon l'axe de l'empilage 10, c'est-à-dire dans une direction selon laquelle ces plots lamifiés 10-10 présentent une grande rigidité.

Du fait de la faible amplitude (quelques degrés) des débattements angulaires autour de l'axe de commande latérale B-B, il est suffisant de réaliser les plots lamifiés sous la forme de lamifiés plats. En outre, le fait que ces plots lamifiés 10-10 ne subissent que de faibles sollicitations, permet une réalisation compacte de ces plots.

Il est à noter, également, que les rotules 2 permettent d'autant plus facilement les basculements des plateaux 3 et 6 autour de l'axe de commande longitudinal A-A que l'axe de leur alésage central, qui est également l'axe de la fusée 9b sur laquelle chacune d'elle est montée, coïncide avec cet axe de basculement longitudinal A-A.

En résumé, dans le dispositif de commande selon l'invention, la retenue en rotation et la translation du plateau non-tournant 3 sont assurées par un support de plateaux 5 coulissant le long d'un guide-plateaux 4 fixe, muni de cannelures, alors que, d'une part, le basculement longitudinal des plateaux 3 et 6 est assuré autour de l'axe de commande longitudinal A-A par deux rotules 2 disposées à 180° l'une de l'autre par rapport à l'axe de rotation X-X, entre le support de plateau 5 coulissant et le plateau non-tournant 3, et que, d'autre part, le basculement latéral des plateaux 3 et 6 est permis par déformation différentielle des plots lamifiés 10-10 disposés parallèlement au plan défini par l'axe de rotation X-X et par l'axe de basculement longitudinal A-A, entre le support de plateaux 5 coulissant et les cages externes 2a des rotules 2.

En outre, le dispositif selon l'invention et tel que décrit ci-dessus présente l'avantage majeur de libérer totalement la partie centrale de ce dispositif, de sorte que l'arbre rotor 1, lorsqu'il joue en même temps le rôle de mât support de moyeu, comme cela est le cas dans l'exemple décrit ci-dessus, peut être doté d'un diamètre relativement important, et d'une épaisseur corrélativement faible, de manière que des équipements complémentaires, tels qu'un organe de fixation et de câblage d'un viseur de mât pour un hélicoptère militaire, par exemple, peuvent y être logés facilement. Enfin, l'utilisation de la bague externe 20a du roulement 20 comme plateau tournant permet une réalisation économique et légère de cet organe, interposé entre le plateau non-tournant 3 et les bielles de pas 22.

Les signes de référence insérés après les caractéristiques techniques mentionnées dans les revendications ont pour seul but de faciliter la compréhension de ces dernières et n'en limitent aucunement la portée.

## Revendications

1. Dispositif de commande du pas collectif et du pas cyclique des pales d'un rotor de giravion, du type comprenant deux plateaux annulaires (3, 6) assemblés par au moins un roulement à billes (20) et montés concentriques autour d'un arbre (1) du rotor, destiné à être entraîné en rotation autour de son axe (X-X), et dont l'un est un plateau non-tournant (3), immobilisé en rotation par au moins un organe de liaison inférieur fixé à au moins un carter (13) rigidement lié à la structure du giravion, ledit plateau non-tournant (3) étant monté, d'une part, déplaçable en translation axiale le long d'un guide-plateaux tubulaire fixe (4), coaxial à l'arbre rotor (1) et entourant une partie de ce dernier, et, d'autre part, oscillant par rapport à cet arbre (1), autour d'un axe de basculement longitudinal (A-A) et d'un axe de basculement latéral (B-B) des plateaux (3, 6) qui sont perpendiculaires l'un à l'autre et chacun à l'axe de rotation (X-X) de l'arbre rotor (1), par l'intermédiaire d'un mécanisme d'articulation (2, 10), tandis que l'autre plateau est un plateau tournant (6), destiné à être entraîné en rotation par l'arbre rotor (1) par au moins un organe de liaison supérieur (8) fixé à l'arbre (1) et/ou au moyeu du rotor, ledit plateau tournant (6) étant relié au levier de commande du pas de chacune des pales du rotor par au moins une bielle de pas (22), le plateau non-tournant (3) étant sollicité par des organes de commande du pas collectif, qui commandent ses déplacements en translation le long du guide-plateaux (4), ainsi que par des organes de commande du pas cyclique, qui commandent ses oscillations par rapport à l'arbre (1), de sorte que le plateau tournant (6), qui suit les mouvements du plateau non-tournant (3) transmet ses mouvements aux leviers de commande de pas par l'intermédiaire des bielles de pas (22), caractérisé en ce que ledit mécanisme d'articulation comprend, d'une part, deux rotules (2) disposées en positions diamétralement opposées de part et d'autre dudit axe de rotation (X-X) dudit arbre rotor (1) et de part et d'autre dudit axe de basculement latéral (B-B), et centrées sur ledit axe de basculement longitudinal (A-A), chacune étant retenue entre un support de plateaux (5), monté coulissant le long dudit guide-plateaux (4), et ledit plateau non-tournant (3), de façon à permettre les oscillations de ce dernier autour dudit axe de basculement longitudinal (A-A), et, d'autre part, deux ensembles de liaison (10-10) rigides à l'encontre des sollicitations en couple autour dudit axe (X-X) de l'arbre rotor (1), mais déformables dans une direction sensiblement parallèle audit axe (X-X) de rotation de l'arbre rotor (1), et dont chacun est monté entre l'une respectivement desdites rotules (2) et ledit support de plateaux (5), de façon à permettre les oscillations dudit plateau non-tournant (3) autour dudit axe de basculement latéral (B-B) par les déformations différentielles desdits deux ensembles de liaison (10-10).

2. Dispositif de commande selon la revendication 1, caractérisé en ce que ledit support de plateaux (5) est tubulaire et monté sensiblement coaxialement autour dudit guide-plateaux (4), et présente des cannelures axiales internes (5a) en prise avec des cannelures axiales externes (4e) de forme correspondante dudit guide-plateaux (4), afin de retenir en rotation le support de plateaux (5) sans gêner ses coulissements sur le guide-plateaux (4), qui constitue simultanément ledit organe de liaison inférieur mobilisant ledit plateau non-tournant (3) en rotation.

3. Dispositif de commande selon l'une des revendications 1 et 2, caractérisé en ce que chacun desdits ensembles de liaison comprend au moins un mécanisme coulissant auto-lubrifié à au moins un patin glissant sur au moins un rail, l'un des deux organes que sont le rail et le patin étant lié à la rotule correspondante (2) et l'autre étant lié au support de plateaux (5).

4. Dispositif de commande selon l'une des revendications 1 et 2, caractérisé en ce que chacun desdits ensembles de liaison comporte au moins un plot lamifié comprenant au moins un empilement alterné (10) d'au moins une lamelle (10a) d'un matériau rigide et d'au moins deux couches (10b) d'un matériau élastiquement déformable, ledit plot lamifié étant maintenu entre ledit support de plateaux (5) et une cage externe (2a) de la rotule (2) correspondante, de sorte que, par la déformation dudit matériau élastiquement déformable, lesdites rotule (2) et cage externe (2a) sont déplaçables dans une direction sensiblement parallèle audit axe de rotation (X-X) et par rapport audit support de plateaux (5) afin de permettre les oscillations desdits plateaux (3, 6) autour dudit axe de basculement latéral (B-B).

5. Dispositif de commande selon la revendication 4, caractérisé en ce que lesdites lamelle (10a) et couche (10b) de chaque empilaient alterné (10) sont retenues entre une armature rigide externe (10c), reliée à une patte de retenue (5b) solidaire du support de plateaux (5), et une armature rigide interne (10d), reliée à ladite cage externe (2a) de la rotule correspondante (2).

6. Dispositif de commande selon la revendication 5, caractérisé en ce que ladite armature externe (10c) présente, du côté opposé à l'armature interne (10d) correspondante, un bossage (10e) de retenue engagé dans un évidement d'un organe fileté (11) vissé sur ladite patte de retenue (5b).

7. Dipositif de commande selon l'une des revendications 5 et 6, caractérisé en ce que ladite armature interne (10d) présente, du côté opposé à l'armature externe (10c) correspondante, un épaulement (10f) et une partie taraudée (10g) aménagés de part et d'autre d'une portée en regard de laquelle ladite cage externe (2a) est fixée sur l'armature interne (10d) en étant maintenue en butée contre ledit épaulement (10f) par le vissage d'un organe fileté (16) dans ladite partie taraudée (10g).

8. Dipositif de commande selon l'une des revendications 4 à 7, caractérisé en ce que chaque empilaient alterné (10) est centré sur un axe passant par le centre de la rotule correspondante (2) et perpendiculaire au plan défini par les axes de rotation (X-X) et de basculement longitudinal (A-A).

9. Dispositif de commande selon l'une des revendications 4 à 8, caractérisé en ce que chaque empilement alterné (10) comprend des lamelles rigides (10a) et des couches déformables (10b) qui sont planes et s'étendent parallèlement au plan défini par les axes de rotation (X-X) et de basculement longitudinal (A-A), de façon à permettre les oscillations des plateaux (3, 6) autour de l'axe de basculement latéral (B-B) par cisaillement des couches déformables (10b) des plots lamifiés.

10. Dispositif de commande selon l'une des revendications 4 à 9, caractérisé en ce que chaque plot lamifié comprend deux empilements alternés (10) disposés de part et d'autre de la rotule correspondante (2) et entre deux pattes de retenue (5b) en saillie sur le support de plateaux (5) de part et d'autre de l'axe de basculement longitudinal (A-A).

11. Dispositif de commande selon la revendication 10, caractérisé en ce que les deux empilements alternés (10) et les deux pattes de retenue (5b) sont disposés respectivement symétriquement l'un ou l'une de l'autre par rapport à l'axe de basculement longitudinal (A-A), lesdites deux pattes de retenue (5b) s'étendant de plus sensiblement parallèlement à cet axe (A-A).

12. Dispositif de commande selon l'une des revendications 10 et 11, caractérisé en ce que lesdits deux empilements (10) ont des armatures externes (10c) qui constituent deux parties opposées d'une même pièce tubulaire rigide externe, qui enveloppe les deux empilements du plot lamifié correspondant ainsi que la rotule (2) correspondante et sa cage externe (2a).

13. Dispositif de commande selon l'une des revendications 10 à 12, caractérisé en ce que lesdits deux empilements (10) ont des armatures internes (10d) qui constituent deux parties opposées d'une même pièce tubulaire rigide interne dans l'évidement central de laquelle sont logées la rotule (2) correspondante et sa cage externe (2a), cette dernière étant retenue contre un épaulement (10f) en saillie vers l'intérieur de l'évidement par le vissage d'un écrou extérieurement fileté (16) dans une partie d'extrémité taraudée (10g) dudit évidement.

14. Dispositif de commande selon l'une des revendications 1 à 13, caractérisé en ce que chaque rotule (2) est montée sur un élément de fixation (9) solidarisé audit plateau non-tournant (3).

15. Dispositif de commande selon la revendication 14, caractérisé en ce que ledit élément de fixation (9) comprend une embase cintrée en arc de cercle (9a), appliquée et fixée contre le plateau non-tournant (3), et une fusée radiale (9b), par rapport à l'axe de rotation (X-X), et autour de laquelle ladite rotule (2) est montée.

16. Dispositif de commande selon la revendication 15, caractérisé en ce que ladite rotule (2) présente un alésage cylindrique central, par lequel elle est engagée coaxialement, par rapport à l'axe de basculement longitudinal (A-A), autour d'une portée délimitée sur ladite fusée radiale (9b) entre un épaulement (9c) et une extrémité filetée (9d) de la fusée (9b), de sorte que la rotule (2) est maintenue en regard de ladite portée en étant appliquée en butée contre ledit épaulement (9c) par un écrou (15) vissé sur ladite extrémité filetée (9d).

17. Dispositif de commande selon la revendication 16, telle que rattachée à la revendication 7, caractérisé en ce que ledit élément de fixation (9) est fixé par son embase cintrée (9a) contre la face radiale interne du plateau non-tournant (3), lui-même en position radiale interne par rapport à chaque roulement (20) et au plateau tournant (6), et en ce que la fusée (9b) correspondante s'étend radialement vers l'intérieur et présente son extrémité filetée (9d) en regard du support de plateaux (5) et en position radiale interne par rapport à son épaulement (9c) de butée pour la rotule (2), tandis que ledit épaulement de butée (10f) pour la cage externe (2a) correspondante sur l'armature interne (10d) d'au moins un empilement (10) correspondant est en position radiale interne vers l'axe de rotation (X-X) et par rapport à ladite partie taraudée (10g) de ladite armature interne (10d) dans laquelle est vissé l'organe fileté (16) maintenant ladite cage externe (2a) sur ladite armature interne (10d), l'armature externe (10c) correspondante étant solidarisée à la patte de retenue correspondante (5b) en saillie sensiblement radiale vers l'extérieur sur ledit support de plateaux (5).

18. Dispositif de commande selon l'une des revendications 1 à 17, caractérisé en ce que chaque organe de liaison supérieur, destiné à entrainer le plateau tournant (6) en rotation avec l'arbre rotor (1), est un compas tournant (8) articulé sur ledit plateau tournant (6) par une rotule (7a), dont le centre et les centres des rotules (2) de basculement des plateaux (3, 6) autour de l'axe de basculement longitudinal (A-A) sont contenus dans un même plan défini par les axes de basculaient longitudinal (A-A) et latéral (B-B).

19. Dispositif de commande selon l'une des revendications 1 à 18, caractérisé en ce que les bielles de pas (22) sont articulées sur ledit plateau tournant (6) par des rotules (22a) dont les centres et les centres des rotules (2) de basculement des plateaux (3, 6) autour de l'axe de basculement longitudinal (A-A) sont contenus dans un même plan, défini par les axes de basculement longitudinal (A-A) et latéral (B-B).

20. Dispositif de commande selon la revendication 2, caractérisé en ce que lesdites cannelures axiales externes (4e) s'étendent le long d'un tronçon supérieur (4a), en forme de cylindre de section circulaire, dudit guide-plateaux (4), qui comporte une partie d'extrémité inférieure tronconique (4d), évasée vers ledit carter (13) et présentant un épaulement radial externe (4d) boulonné sur ledit carter (13), et une collerette (4c) de centrage sur ledit carter (13) assurant la retenue annulaire d'une bague externe (12c) d'un unique roulement de portance (12), dans lequel est encastrée l'extrémité inférieure (la) de l'arbre rotor (1).

## Patentansprüche

1. Steuervorrichtung für den kollektiven und den zyklischen Einstellwinkel der Rotorblätter eines Drehflügelflugzeug Rotors vom Typ mit zwei ringförmigen Scheiben (3, 6), die durch wenigstens ein Kugellager (20) zusammengefügt und konzentrisch um eine Welle (1) des Rotors angebracht sind, der in Drehung um seine Achse (X-X) angetrieben werden soll, und von denen eine eine nicht rotierende Scheibe (3) ist, die durch wenigstens ein unteres Verbindungselement drehfest gehalten ist, das an wenigstens einem mit dem Aufbau des Drehflügelflugzeugs starr verbundenen Gehäuse (13) befestigt ist, wobei die nicht rotierende Scheibe (3) einerseits in Axialverschiebung längs einer festen, rohrförmigen Scheibenführung (4), die zu der Rotorwelle (1) koaxial liegt und einen Teil von dieser umgibt, verschiebbar und andererseits bezüglich dieser Welle (1) über einen Gelenkmechanismus (2, 10) um eine Längskippachse (A-A) und eine Seitenkippachse (B-B) der Scheiben (3, 6), die senkrecht zueinander und jeweils zu der Drehachse (X-X) des Rotors liegen, schwingend angebracht ist, während die andere Scheibe eine rotierende Scheibe (6) ist, die durch die Rotorwelle (1) über wenigstens ein an der Welle (1) und/oder der Nabe des Rotors befestigtes, oberes Verbindungsorgan (8) in Drehung angetrieben werden soll, wobei die rotierende Scheibe (6) durch wenigstens eine Winkeleinstellstange (22) mit dem Einstellwinkelsteuerhebel jedes der Blätter des Rotors verbunden ist, wobei die nicht rotierende Scheibe (3) durch Steuerorgane für den kollektiven Einstellwinkel, die ihre translatorischen Verschiebungen längs der Scheibenführung (4) steuern, sowie durch Steuerorgane für den zyklischen Einstellwinkel vorgespannt ist, die ihre Pendelbewegungen bezüglich der Welle so steuern, daß die den Bewegungen der nicht rotierenden Scheibe (3) folgende, rotierende Scheibe (6) ihre Bewegungen über Winkeleinstellstangen (22) den Einstellwinkelsteuerhebeln überträgt, dadurch gekennzeichnet, daß der Gelenkmechanismus einerseits zwei an diametral entgegengesetzten Positionen beiderseits der Drehachse (X-X) der Rotorwelle und beiderseits der seitlichen Kippachse (B-B) angeordnete Kugelgelenke (2) aufweist, die an der Längskippachse (A-A) zentriert sind, wobei jedes zwischen einem Scheibenträger (5), der längs der Scheibenführung verschiebbar gelagert ist, und der nicht rotierenden Scheibe (3) gehalten ist, so daß deren Pendelbewegungen um die Längskippachse (A-A) zugelassen werden, und andererseits zwei Verbindungseinheiten (10-10) aufweist, die gegenüber den Momentvorspannungen um die Achse (X-X) der Rotorwelle starr, aber in einer im wesentlichen zu der Drehachse (X-X) der Rotorwelle (1) parallelen Richtung verformbar sind, und von denen jede jeweils zwischen einem Kugelgelenk (2) und dem Scheibenträger (5) angebracht ist, so daß die Pendelbewegungen der nicht rotierenden Scheibe (3) um die seitliche Kippachse (B-B) durch die Differenzverformungen der beiden Verbindungseinheiten (10-10) zugelassen werden.

2. Steuervorrichtung nach Anspruch 1, dadurch gekennzeichnet, daß der Scheibenträger (5) rohrförmig und im wesentlichen koaxial um die Scheibenführung (4) angebracht ist sowie axial innere Rillen (5a) in Eingriff mit axial äußeren Rillen (4e) der Scheibenführung (4) mit entsprechender Form aufweist, um den Scheibenträger (5) in Drehung zu halten, ohne seine Gleitbewegungen an der Scheibenführung (4) zu stören, die gleichzeitig das untere Verbindungsorgan bildet, das die nicht rotierende Scheibe (3) am Drehen hindert.

3. Steuervorrichtung nach einem der Ansprüche 1 und 2, dadurch gekennzeichnet, daß jede der Verbindungseinheiten wenigstens einen selbstschmierenden Gleitmechanismus mit wenigstens einem an wenigstens einer Schiene gleitenden Schuh aufweist, wobei eines der beiden Organe, also die Schiene oder der Schuh, mit dem entsprechenden Kugelgelenk (2) und das andere mit dem Scheibenträger (5) verbunden ist.

4. Steuervorrichtung nach einem der Ansprüche 1 und 2, dadurch gekennzeichnet, daß jede der Verbindungseinheiten wenigstens einen laminierten Stopfen mit wenigstens einer abwechselnden Stapelung (10) aus wenigstens einer Lamelle (10a) aus einem starren Material und wenigstens zwei Schichten (10b) aus einem elastisch verformbaren Material aufweist, wobei der laminierte Stopfen zwischen dem Scheibenträger (5) und einem äußeren Käfig (2a) des entsprechenden Kugelgelenks (2) gehalten ist, so daß das Kugelgelenk (2) und der äußere Käfig (2a) durch Verformung des elastisch verformbaren Materials in einer im wesentlichen zu der Drehachse (X-X) parallelen Richtung und bezüglich des Scheibenträgers (5) verschiebbar sind, um die Pendelbewegungen der Scheiben (3, 6) um die seitliche Kippachse (B-B) zuzulassen.

5. Steuervorrichtung nach Anspruch 4, dadurch gekennzeichnet, daß die Lamelle (10a) und die Schicht (10b) jeder abwechselnden Stapelung (10) zwischen einem starren äußeren Beschlag (10c), der mit einer fest mit dem Scheibenträger (5) verbundenen Halteklammer (5b) verbunden ist, und einem starren inneren Beschlag (10d) gehalten werden, der mit dem äußeren Käfig (2a) des entsprechenden Kugelgelenks (2) verbunden ist.

6. Steuervorrichtung nach Anspruch 5, dadurch gekennzeichnet, daß der äüßere Beschlag (10c) an der dem entsprechenden inneren Beschlag (10d) entgegengesetzten Seite einen Haltebuckel (10e) aufweist, der in eine Ausnehmung eines mit einem Gewinde versehenen Organs (11) eingesetzt ist, das auf die Halteklammer (5b) geschraubt ist.

7. Steuervorrichtung nach einem der Ansprüche 5 und 6, dadurch gekennzeichnet, daß der innere Beschlag (10d) an der dem entsprechenden äußeren Beschlag (10c) entgegengesetzten Seite eine Schulter (10f) sowie einen mit einem Innengewinde versehenen Teil (10g) aufweist, die beiderseits einer Auflagefläche vorgesehen sind, gegenüber welcher der äußere Käfig (2a) an dem inneren Beschlag (10d) befestigt ist, wobei er durch Verschraubung eines mit einem Gewinde versehenen Organs (16) in dem mit einem Innengewinde versehenen Teil (10g) in Anlage gegen die Schulter (10f) gehalten ist.

8. Steuervorrichtung nach einem der Ansprüche 4 bis 7, dadurch gekennzeichnet, daß jede abwechselnde Stapelung (10) an einer Achse zentriert ist, die durch das Zentrum des entsprechenden Kugelgelenks (2) verläuft und senkrecht zu der durch die Drehachse (X-X) und die Längskippachse (A-A) gebildeten Ebene liegt.

9. Steuervorrichtung nach einem der Ansprüche 4 bis 8, dadurch gekennzeichnet, daß jede abwechselnde Stapelung (10) starre Lamellen (10a) und verformbare Schichten (10b) aufweist, die flach sind und sich parallel zu der durch die Drehachse (X-X) und die Längskippachse (A-A) gebildeten Ebene erstrecken, so daß die Pendelbewegungen der Scheiben (3, 6) um die seitliche Kippachse (B-B) durch Scherung der verformbaren Schichten (10b) der laminierten Stopfen zugelassen sind.

10. Steuervorrichtung nach einem der Ansprüche 4 bis 9, dadurch gekennzeichnet, daß jeder laminierte Stopfen zwei abwechselnde Stapelungen (10) aufweist, die beiderseits des entsprechenden Kugelgelenks (2) und zwischen zwei Halteklammern (5b) angeordnet sind, die an dem Scheibenträger (5) beiderseits der Längskippachse (A-A) vorspringen.

11. Steuervorrichtung nach Anspruch 10, dadurch gekennzeichnet, daß die beiden abwechselnden Stapelungen (10) und die beiden Halteklammern (5b) jeweils bezüglich der Längskippachse (A-A) symmetrisch angeordnet sind, wobei sich die beiden Halteklammern (5b) darüberhinaus im wesentlichen parallel zu dieser Achse (A-A) erstrecken.

12. Steuervorrichtung nach einem der Ansprüche 10 und 11, dadurch gekennzeichnet, daß die beiden Stapelungen (10) äußere Beschläge (10c) aufweisen, die zwei entgegengesetzte Teile ein und desselben äußeren, starren und rohrförmigen Teils bilden, das die beiden Stapelungen des entsprechenden laminierten Stopfens sowie das entsprechende Kugelgelenk (2) und seinen äußeren Käfig (2a) umgibt.

13. Steuervorrichtung nach einem der Ansprüche 10 bis 12, dadurch gekennzeichnet, daß die beiden Stapelungen (10) innere Beschläge (10d) aufweisen, die zwei entgegengesetzte Teile ein und desselben inneren, starren und rohrförmigen Teils bilden, in dessen zentraler Ausnehmung das entsprechende Kugelgelenk (2) und sein äußerer Käfig (2a) aufgenommen sind, wobei dieser durch Verschraubung einer mit einem Außengewinde versehenen Mutter (16) in einen mit einem Innengewinde versehenen Endteil (10g) der Ausnehmung gegen eine ins Innere der Ausnehmung vorspringende Schulter (10f) gehalten wird.

14. Steuervorrichtung nach einem der Ansprüche 1 bis 13, dadurch gekennzeichnet, daß jedes Kugelgelenk (2) an einem mit der nicht rotierenden Scheibe (3) fest verbundenen Befestigungselement (9) angebracht ist.

15. Steuervorrichtung nach Anspruch 14, dadurch gekennzeichnet, daß das Befestigungselement (9) einen kreisbogenförmig gekrümmten Sockel (9a) aufweist, der gegen die nicht rotierende Scheibe (3) angelegt und befestigt ist, sowie einen bezüglich der Drehachse (X-X) radialen Schenkel (9b), um den das Kugelgelenk (2) angebracht ist.

16. Steuervorrichtung nach Anspruch 15, dadurch gekennzeichnet, daß das Kugelgelenk (2) eine zentrale zylindrische Bohrung aufweist, durch die es bezüglich der Längskippachse (AA) um eine an dem radialen Schenkel (9b) abgegrenzte Auflagefläche zwischen einer Schulter (9c) und einem mit einem Gewinde versehenen Ende (9d) des Schenkels (9b) koaxial so eingesetzt ist, daß das Kugelgelenk (2) gegenüber der Auflagefläche gehalten wird, wobei es durch eine auf das mit dem Gewinde versehene Ende (9d) geschraubte Mutter (15) in Anlage gegen die Schulter (9c) gedrückt wird.

17. Steuervorrichtung nach Anspruch 16 wie nach Anspruch 7, dadurch gekennzeichnet, daß das Befestigungselement (9) durch seinen gekrümmten Sockel (9a) gegen die radial innere Seite der nicht rotierenden Scheibe (3) befestigt ist, die sich ihrerseits in radial innerer Position bezüglich jedes Lagers (20) und der rotierenden Scheibe (6) befindet, und daß sich der entsprechende Schenkel (9b) radial nach innen erstreckt und sein mit einem Gewinde versehenes Ende (9d) gegenüber dem Scheibenträger (5) und an radial innerer Position bezüglich seiner Anschlagschulter (9c) für das Kugelgelenk (2) aufweist, während sich die Anschlagschulter (10f) für den entsprechenden äußeren Käfig (2a) an dem inneren Beschlag (10d) wenigstens einer entsprechenden Stapelung (10) in radial innerer Position zu der Drehachse (X-X) und bezüglich des mit dem Innengewinde versehenen Teils (10g) des inneren Beschlags (10d) befindet, in den das mit dem Gewinde versehene Organ (16) geschraubt ist, das den äußeren Käfig (2a) an dem inneren Beschlag (10d) hält, wobei der entsprechende äußere Beschlag (10c) mit der entsprechenden Halteklammer (5b) fest verbunden ist, die im wesentlichen radial an dem Scheibenträger (5) nach außen vorspringt.

18. Steuervorrichtung nach einem der Ansprüche 1 bis 17, dadurch gekennzeichnet, daß jedes obere Verbindungsorgan, das dazu bestimmt ist, die rotierende Scheibe (6) in Drehung mit der Rotorwelle (1) anzutreiben, eine Drehgabel (8) ist, die durch ein Kugelgelenk (7a) an der rotierenden Scheibe (6) angelenkt ist, dessen Zentrum wie die Zentren der Kugelgelenke (2) zum Kippen der Scheiben (3, 6) um die Längskippachse (A-A) in ein und derselben, durch die Längs- und Seitenkippachsen (A-A bzw. B-B) gebildeten Ebene enthalten sind.

19. Steuervorrichtung nach einem der Ansprüche 1 bis 18, dadurch gekennzeichnet, daß die Winkeleinstellstangen (22) an der rotierenden Scheibe (6) durch Kugelgelenke (22a) angelenkt sind, deren Zentren wie die Zentren der Kugelgelenke (2) zum Schwenken der Scheiben (3, 6) um die Längskippachse (A-A) in ein und derselben, durch die Längs- und Seitenkippachsen (A-A bzw. B-B) gebildeten Ebene enthalten sind.

20. Steuervorrichtung nach Anspruch 2, dadurch gekennzeichnet, daß sich die axial äußeren Rillen (4e) längs eines oberen Abschnitts (4a) der Scheibenführung (4) in Form eines Zylinders mit kreisförmigem Querschnitt erstrecken, die einen kegelstumpfförmigen unteren Endteil (4d) aufweist, der zu dem Gehäuse (13) hin aufgeweitet ist und eine radial äußere Schulter (4d), die mit dem Gehäuse (13) durch Bolzen verbunden ist, sowie einen Bund (4c) zur Zentrierung an dem Gehäuse (13) aufweist, der den Ringhalt eines äußeren Rings (12c) eines einzigen Traglagers (12) gewährleistet, in das das untere Ende (1a) der Rotorwelle (1) eingefügt ist.

## Claims

1. A device for controlling the collective pitch and the cyclic pitch of the blades of a rotorcraft rotor, of the type comprising two annular disks (3,6) which are assembled by at least one ball bearing (20) and are mounted concentrically about a shaft (1) of the rotor, intended to be driven in rotation about its axis (X-X), and one of which is a non-rotating disk (3) immobilized in rotation by at least one lower linking member fixed to at least one casing (13) rigidly linked to the structure of the rotorcraft, said non-rotating disk (3) being mounted, on the one hand, so as to be displaceable in axial translational motion along a fixed, tubular disk guide (4) coaxial with the rotor shaft (1) and surrounding part of the latter and, on the other hand, so as to oscillate with respect to this shaft (1) about a longitudinal tilting axis (A-A) and a lateral tilting axis (B-B) of the disks (3,6), which are perpendicular to each other and each one to the axis of rotation (X-X) of the rotor shaft (1), via an articulation mechanism (2,10), whilst the other disk is a rotating disk (6) intended to be driven in rotation by the rotor shaft (1) by at least one upper linking member (8) fixed to the shaft (1) and/or to the hub of the rotor, said rotating disk (6) being connected to the pitch-control lever of each of the blades of the rotor by at least one pitch connecting rod (22), the non-rotating disk (3) being urged by collective-pitch control members which control its displacements in translational motion along the disk guide (4), as well as by cyclic-pitch control members which control its oscillations with respect to the shaft (1), with the result that the rotating disk (6), which follows the movements of the non-rotating disk (3), transmits its movements to the pitch-control levers via pitch connecting rods (22), characterized in that said articulation mechanism comprises, on the one hand, two swivel joints (2) arranged in diametrically opposite positions on either side of the said axis of rotation (X-X) of said rotor shaft (1) and on either side of said lateral tilting axis (B-B), and centered on said longitudinal tilting axis (A-A), each swivel joint being retained between a disk support (5), mounted so as to slide along said disk guide (4), and said non-rotating disk (3), so as to permit the oscillations of the latter about said longitudinal tilting axis (A-A) and, on the other hand, two linking assemblies (10-20) which are rigid against torque stresses about said axis (X-X) of the rotor shaft (1) but are deformable in a direction substantially parallel to said axis (X-X) of rotation of the rotor shaft (1), and each of which is mounted between respectively one of said swivel joints (2) and said disk support (5) so as to permit the oscillations of said non-rotating disk (3) about said lateral tilting axis (B-B) by the differential deformations of said two linking assemblies (10-10).

2. The control device according to claim 1, characterized in that said disk support (5) is tubular and mounted substantially coaxially about said disk guide (4), and has inner axial splines (5a) engaging with outer axial splines (4e) of a corresponding shape of the said disk guide (4) in order to retain in rotation the disk support (5) without hindering its sliding movements on the disk guide (4) which constitutes simultaneously said lower linking member immobilizing said non-rotating disk (3) in rotation.

3. The control device according to any one of claims 1 and 2, characterized in that each of said linking assemblies comprises at least one self-lubricating sliding mechanism with at least one shoe sliding on at least one rail, one of the two members, the rail or the shoe, being linked to the corresponding swivel joint (2) and the other being linked to the disk support (5).

4. The control device according to any one of claims 1 and 2, characterized in that each of said linking assemblies comprises at least one laminated block comprising at least one alternating stack (10) of at least one thin plate (10a) of a rigid material and of at least two layers (10b) of an elastically deformable material, said laminated block being held between said disk support (5) and an outer cage (2a) of the corresponding swivel joint (2) so that, by the deformation of said elastically deformable material, said swivel joint (2) and said outer cage (2a) can be displaced in a direction substantially parallel to said axis of rotation (X-X) and with respect to said disk support (5), in order to permit the oscillations of said disks (3,6) about said lateral tilting axis (B-B).

5. Control device according to claim 4, characterized in that said thin plate (10a) and said layer (10b) of each alternating stack (10) are retained between an outer rigid armature (10c) connected to a retaining lug (5b) integral with the disk support (5), and an inner rigid armature (10d) connected to said outer cage (2a) of the corresponding swivel joint (2).

6. The control device according to claim 5, characterized in that said outer armature (10c) has, on the side opposite the corresponding inner armature (10d), a retaining boss (10e) engaged in a recess of a threaded member (11) screwed onto said retaining lug (5b).

7. The control device according to any one of claims 5 and 6, characterized in that said inner armature (10d) has, on the side opposite the corresponding outer armature (10c), a shoulder (10f) and a tapped part (10g) which are arranged on either side of a bearing surface opposite which said outer cage (2a) is fixed to the inner armature (10d), being held in abutment with said shoulder (10f) by the screwing of a threaded member (16) into said tapped part (10g).

8. The control device according to one of claims 4 to 7, characterized in that each alternating stack (10) is centered on an axis passing through the center of the corresponding swivel joint (2) and perpendicular to the plane defined by the axes of rotation (X-X) and of longitudinal tilting (A-A).

9. The control device according to one of claims 4 to 8, characterized in that each alternating stack (10) comprises thin rigid plates (10a) and deformable layers (10b) which are plane and which extend parallel to the plane defined by the axes of rotation (X-X) and of longitudinal tilting (A-A) so as to permit the oscillations of the disks (3,6) about the lateral tilting axis (B-B) by shearing of the deformable layers (10b) of the laminated blocks.

10. The control device according to one of claims 4 to 9, characterized in that each laminated block comprises two alternating stacks (10), arranged on either side of the corresponding swivel joint (2) and between two retaining lugs (5b) projecting on the disk support (5), on either side of the longitudinal tilting axis (A-A).

11. The control device according to claim 10, characterized in that the two alternating stacks (10) and the two retaining lugs (5b) are arranged respectively symmetrically relative to each other with respect to the longitudinal tilting axis (A-A), said two retaining lugs (5b) extending, moreover, substantially parallel to this axis (A-A).

12. The control device according to any one of claims 10 and 11, characterized in that said two stacks (10) have outer armatures (10c) which constitute two opposite parts of a same outer, rigid tubular piece which envelopes the two stacks of the corresponding laminated block as well as the corresponding swivel joint (2) and its outer cage (2a).

13. The control device according to one of claims 10 to 12, characterized in that said two stacks (10) have inner armatures (10d) which constitute two opposite parts of a same inner, rigid tubular piece, in the central recess of which are housed the corresponding swivel joint (2) and its outer cage (2a), the latter being retained against a shoulder (10f) projecting toward the inside of the recess by the screwing of an externally threaded nut (16) into a tapped end part (10 g) of said recess.

14. The control device according to one of claims 1 to 13, characterized in that each swivel joint (2) is mounted on a fixing element (9) integrally connected to said non-rotating disk (3).

15. The control device according to claim 14, characterized in that the said fixing element (9) comprises a base curved in an arc of a circle (9a), which is applied and fixed against the non-rotating disk (3), and an axle journal (9b) which is radial with respect to the axis of rotation (X-X) and about which said swivel joint (2) is mounted.

16. The control device according to claim 15, characterized in that said swivel joint (2) has a central cylindrical bore by way of which it is engaged coaxially with respect to the longitudinal tilting axis (A-A), about a bearing surface defined on said radial axle journal (9b) between a shoulder (9c) and one threaded end (9d) of the axle journal (9b), with the result that the swivel joint (2) is held opposite said bearing surface, being applied in abutment with said shoulder (9c) by a nut (15) screwed onto said threaded end (9d).

17. The control device according to claim 16, as linked with claim 7, characterized in that said fixing element (9) is fixed by way of its curved base (9a) against the inner radial face of the non-rotating disk (3), itself in an inner radial position with respect to each rolling bearing (20) and to the rotating disk (6), and in that the corresponding axle journal (9b) extends radially inwards and has its threaded end (9d) opposite the disk support (5) and in an inner radial position with respect to its abutment shoulder (9c) for the swivel joint (2), whilst said abutment shoulder (10f) for the corresponding outer cage (2a) on the inner armature (10d) of at least one corresponding stack (10) is in an inner radial position toward the axis of rotation (X-X) and with respect to said tapped part (10g) of said inner armature (10d) in which is screwed the threaded member (16) holding said outer cage (2a) on said inner armature (10d), the corresponding outer armature (10c) being integrally connected to the corresponding retaining lug (5b) which projects substantially radially outwards on said disk support (5).

18. The control device according to one of claims 1 to 17, characterized in that each upper linking member, intended to drive the rotating disk (6) in rotation with the rotor shaft (1), is a rotating scissor link assembly (8) articulated on said rotating disk (6) by way of a swivel joint (7a), the center of which, and the centers of the swivel joints (2) for the tilting of the disks (3,6) about the longitudinal tilting axis (A-A) are contained in a same plane defined by the longitudinal tilting axis (A-A) and the lateral tilting axis (B-B).

19. Control device according to one of claims 1 to 18, characterized in that the pitch connecting rods (22) are articulated on said rotating disk (6) by way of swivel joints (22a), the centers of which, and the centers of the swivel joints (2) for the tilting of the disks (3,6) about the longitudinal tilting axis (A-A), are contained in a same plane defined by the longitudinal tilting axis (A-A) and the lateral tilting axis (B-B).

20. The control device according to claim 2, characterized in that said outer axial splines (4e) extend along an upper section (4a), in the form of a cylinder of circular cross-section, of the said disk guide (4) which comprises a frustoconical lower end part (4d), flared toward said casing (13) and having an outer radial shoulder (4d) bolted onto said casing (13), and a flange (4c) for centering on said casing (13) ensuring the annular retention of an outer race (12c) of a single lift rolling bearing (12), in which the lower end (1a) of the rotor shaft (1) is embedded.
